# EUROPEAN PATENT SPECIFICATION

(11) **EP 2 319 149 B1**
(45) Date of publication and mention of the grant of the patent: **22.01.2020**
(21) Application number: 09784858.4
(22) Date of filing: 04.08.2009
(51) Int. Cl.: H02H 1/00, H02H 7/08

(54) **OVERLOAD RELAY**
ÜBERLASTSCHUTZ
RELAIS DE SURCHARGE

(30) Priority: 04.08.2008 GB 0814250
(43) Date of publication of application: 11.05.2011
(73) Proprietor: Eaton Intelligent Power Limited, Dublin 4 (IE)
(72) Inventor: REEDER, Brian, Martin, Anglesey LL59 5NE (GB); GANLEY, Sean, Christopher, Abergele LL22 8JD (GB); LEWIS, Carl, Justin, Conwy LL32 8YY (GB); CROSIER, Mark, David, Anglesey LL65 1PD (GB)
(74) Representative: Leadbetter, Benedict
(86) International application number: PCT/GB2009/001910
(87) International publication number: WO 2010/015811

(56) References cited:
- EP-A- 0 407 105
- WO-A-2007/074023
- DE-U1- 20 207 495
- US-A- 5 627 714
- US-A- 5 761 018
- US-A- 5 808 847
- US-A1- 2003 146 725

## Description

WO 2007/074023 A1 discloses a protection unit for an AC or DC low-voltage power supply line, comprising means for detecting the current circulating in one or more power supply line conductor(s) and at least first electronic protection means operatively coupled to a circuit breaker with at least one pole for inserting along said conductor, characterized in that said detection means comprise at least one resistor suitable for electrical connection in series with said circuit breaker pole and for enabling the passage of the current circulating in said conductor, and at least a first electronic processing circuit that receives a signal indicative of the voltage at the terminals of said resistor and delivers to said first electronic protection means a signal that is indicative of the current circulating in said line conductor.

This invention relates to an overload relay for protecting a motor (or other device) from becoming thermally overloaded.

The maximum load current of a motor is known as the Full Load Amps value or FLA value of the motor. The FLA values of motors can vary from 0.1 Amps to several hundred amps. When the current supplied to the motor by a power supply exceeds the FLA value of the motor for too long, the motor can overheat causing damage.

An overload relay is a device for protecting a motor or other device from an overload condition by interrupting the continuity of the power supply before the motor or other device becomes thermally overloaded. For example, a motor may become thermally overloaded due to excessive currents being supplied to the motor or due to an imbalance of currents supplied by supply lines to the motor.

Overload relays are classified by a Full Load Amps (FLA) value. An overload current is defined as a current which exceeds the FLA value of the overload relay. The FLA value of the overload relay is usually chosen to correspond to the FLA value of the motor or other device to be protected by the overload relay.

Overload relays are also classified by a trip class. The trip class of an overload relay determines the maximum time in seconds an overload current can flow before the continuity of the power supply is interrupted by the overload relay. Typically, overload relays have a trip class of 10, 20 or 30, but other trip classes also exist.

The maximum permissible ratio of overload current to time flowing for a given motor is defined by standards such as the International Electrotechnical Commission standard 60947 ("IEC 60947") and the Underwriters Laboratories Safety Standard 508 ("UL 508"). Overload relays are usually designed to interrupt the continuity of a power supply within these standards. A worst case scenario may be an overload current which is twelve times the maximum working current for a period of up to thirty seconds.

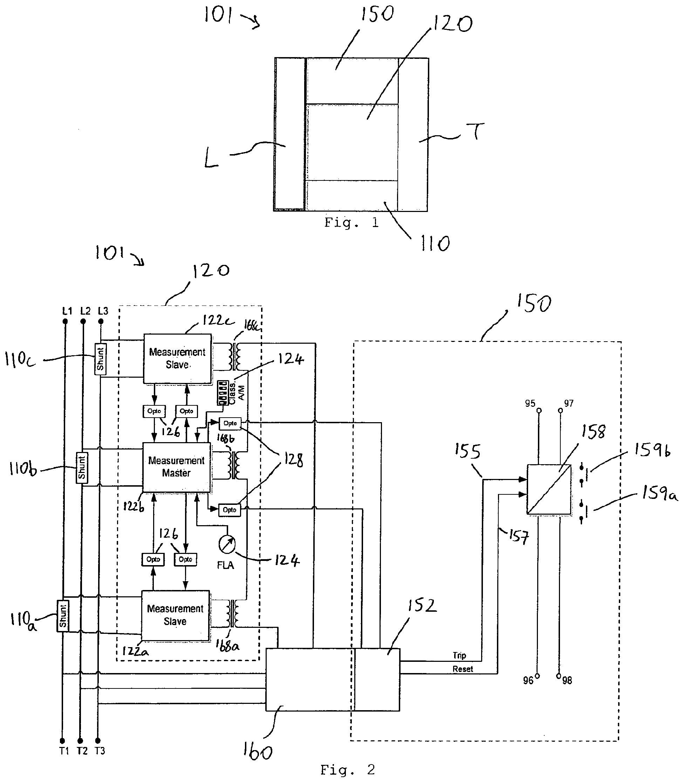

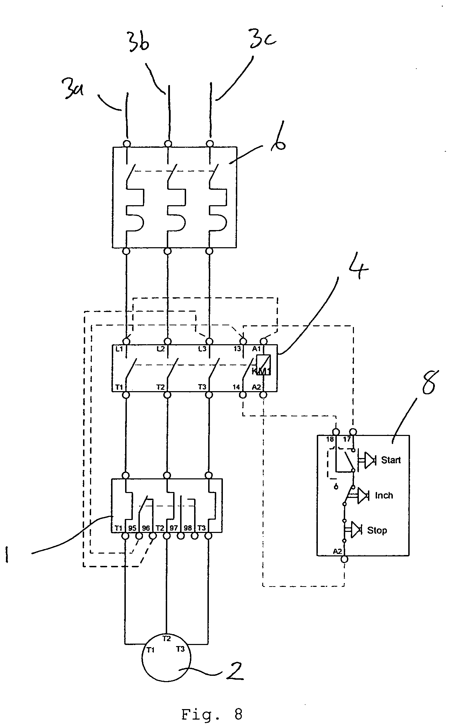

Fig. 8 shows a possible arrangement for using an overload relay 1 (such as an overload relay according to the present invention) to protect a three-phase AC motor 2. In Fig. 2, the three-phase AC motor 2 connected to a three-phase AC power supply (not shown) by three supply lines 3a, 3b, 3c. The overload relay 1 is located downstream of a contactor 4.

The contactor 4 is an electrically controlled switch for interrupting and restoring the continuity of the power supply. The contactor has a set of fixed contacts (connected to terminals L1, L2, L3) and moving contacts (connected to terminals T1, T2, T3) located in the power supply lines 3a, 3b, 3c. The moving contacts are controlled by an electromagnet (connected between terminals A1, A2). When the electromagnet is energised by current, it generates a field which closes the moving contacts to the fixed contacts so as to provide continuity to the power supply.

The overload relay controls the supply of current to the electromagnet of the contactor. In normal operation (no overload) the overload relay 1 supplies current to the contactor so as to maintain continuity of the power supply. In the event of the motor 2 becoming overloaded, the overload relay 1 stops current from being supplied to the contactor 4 which causes the contacts within the contactor 4 to open and so that the contactor 4 interrupts the continuity of the power supply.

A circuit breaker 6 is located upstream of the contactor 4 and is for interrupting the continuity of the power supply in the event of a short circuit. Local controls 8 are provided which are connected to the contactor 4 and allow the motor 2 to be controlled by an operator.

There are two main types of overload relay, electromechanical overload relays and electronic overload relays.

Electromechanical relays include a thermal bimetal which is placed in each supply line of a three-phase power supply. Each thermal bimetal bends in proportion to the current flowing through it, and therefore to the heat generated within the bimetal. If an overload current flows for a period of time through a supply line then the bimetal in that supply line bends to a point where a mechanical latch is released causing a pair of contacts in a contactor to open, thus interrupting the continuity of the power supply. Once the continuity of the power supply has been interrupted, the bimetal cools and returns to its original shape and which allows the continuity of the power supply to be restored.

Bimetals heat and cool in a way which corresponds to the heating and cooling of a motor, i.e. according to the thermal energy associated with a current through the motor. The thermal energy of a current can be defined as I_{RMS}²t where I_{RMS} is the root mean squared current and t is the duration of current flow. By choosing an electromechanical overload relay having a bimetal which approximates the thermal characteristics of a particular motor, the electromechanical overload relay is able to prevent the motor from becoming overloaded. In practice, this is achieved by selecting an electromechanical overload relay having an FLA value that corresponds to the FLA of the motor.

Electronic overload relays use a current transformer to measure the current flowing through each supply line of a power supply. The measured current is then used to determine whether the continuity of the power supply should be interrupted.

Most electronic overload relays work by charging a capacitor at a rate proportional to the current measured by the current transformer. The charge on the capacitor is then compared to a first threshold. If charge exceeds the first threshold, then a bi-stable relay is tripped in order to interrupt the continuity of the power supply. Once the bi-stable relay is tripped, the capacitor discharges until it drops below a second threshold level at which time the bi-stable relay returns to its original position.

At its most general, the invention provides an overload relay for protecting a motor or other device from an overload condition, the overload relay having one or more shunt resistors which are locatable in the supply line(s) of a power supply for the motor or other device, and a control means for measuring current in the supply line(s) of the power supply by measuring the voltage across the shunt resistor(s). The power supply may have a single supply line or plural supply lines. The supply line(s) may carry AC or DC current.

Previous electronic overload relays measured current in the supply lines of a power supply using current transformers, not shunt resistors. Previous electromechanical devices did not measure currents using shunt resistors but instead used thermal bi-metals which bend according to the current passing through it. The inventors have found that shunt resistors provide various advantages which are described below.

In a first aspect of the invention, there is provided an overload relay according to claim 1.

The control means may be connected across each of the shunt resistors, so it can receive a signal representative of the voltage across each shunt resistor. Since, according to the equation V=IR, the voltage across the shunt resistor is proportional to the current though the shunt resistor, a signal representative of the voltage across the shunt resistor is also representative of the current through the shunt resistor.

When the overload relay is in use, each shunt resistor is located in the current path of a respective supply line of the power supply and therefore the current through each shunt resistor is the same as the current through a respective supply line of the power supply. Accordingly, the signals representative of current through the shunt resistors received by the measuring units are also representative of current through the supply lines of the power supply when the overload relay is in use. The control means is therefore able to determine whether an overload condition exists based on one or more of the signals representative of current through the supply lines of a power supply when the overload relay is in use. The terms "current through the shunt resistors" and "current through the supply lines when the overload relay is in use" may be used interchangeably herein.

An overload condition may be defined as a condition in which the motor or other device is at risk of being thermally overloaded. For example, the overload condition may include: current through a supply line exceeding a predetermined threshold, e.g. an FLA value; current through a supply line exceeding a predetermined threshold for a predetermined amount of time; loss of a supply line (i.e. zero current in the supply line) and/or reduced current in a supply line.

For the avoidance of doubt, where a process is described as being based on a signal, that process may be directly based on that signal or indirectly based on that signal. For example, the process may be carried out using a further signal which has been derived from the original signal, rather than using the original signal itself. Thus, the control means may be arranged to determine that an overload condition exists based on a signal or parameter which is derived from one or more of the signals representative of current through the shunt resistors.

In summary, the overload relay according to the first aspect uses shunt resistors to measure current through the supply lines of a power supply for a motor or other device. The inventors have observed that this arrangement is able to provide various advantages over previous overload relays.

One advantage is that a shunt resistor can be much smaller than a current transformer having the same current rating, therefore allowing a smaller overload relay to be produced. A smaller overload relay can also be produced because the shunt is locatable in the current path of a supply line of a power supply. Shunt resistors may also have a lower cost than equivalent current transformers.

Yet another advantage of the overload relay according to the first aspect is that the overload relay is able to be used with a direct current power supply for the motor or other device. Previous electronic overload relays which used current transformers for current measurement could only be used with alternating currents.

The control means may include a plurality of measuring units, each measuring unit being connected to a respective one of the shunt resistors and arranged to receive a signal representative of current through the shunt resistor to which it is connected. Each measuring unit may be provided as a separate integrated circuit, such as an "application-specific" integrated circuit ("ASIC") .

Each measuring unit may be connected across a respective one of the shunt resistors, so each measuring unit can receive a signal representative of the voltage across a respective shunt resistor (which is also representative of the current through the shunt resistor by the equation V=IR).

The measuring units of the overload relay may be electrically isolated from one another. In other words, the measuring units may be arranged such that there is no direct electrical connection or contact between each of the measuring units. The electric isolation may be provided by providing a space or an electrical isolating material between the measuring units. If the measuring units are coupled to each other, the electrical isolation may be provided by the measuring units being coupled to each other by one or more electrically isolating components such as optical isolators and/or transformers.

The voltages between the supply lines of a power supply, e.g. a three phase AC power supply, can be very large. Consequently, the voltages between the shunt resistors of the overload relay may in practice be very large. The inventors have observed that large voltages such as these could cause damage to the overload relay if each of the shunt resistors were connected to a single unit. Therefore, if the overload relay has measuring units which are electrically isolated from one another, the overload relay may be less likely to be damaged by the large voltages that may exist between the supply lines of the power supply.

Each measuring unit may include an amplification means for amplifying the signal representative of current through the shunt resistor to which the measuring unit is connected. This may make the signal easier for the control unit to process, e.g. if the shunt resistors have a low resistance then the voltages across the shunt resistors could be very small and so difficult to process if unamplified. Also, the amplification means may be used in the adjustment of an FLA value of the overload relay, as described in more detail below. The amplification means may include one or more amplifiers. The gain of some or all of the one or more amplifiers may be adjustable, i.e. programmable.

Each measuring unit may include an analogue to digital converter for converting the signal representative of current through the shunt resistor to which the measuring unit is connected into a digital signal. The digital signals from the measuring units may subsequently processed by a digital signal processor and/or a central processing unit (CPU).

Each measuring unit may include an energy store for storing energy to power the measuring unit. This may enable each measuring unit to be powered when power from a source external to the measuring unit (e.g. from a power supply unit) is removed. If the measuring units are powered from one of the supply lines (e.g. as described below), then including an energy store may enable the measuring units to continue to function when the continuity of the power supply is interrupted, e.g. for more than 10 or 15 minutes so as to allow the cooling of the motor or other device to be modelled. The energy store may include a capacitor.

The control means may include a processing means arranged to determine whether an overload condition exists based on one or more of the signals representative of current through the shunt resistors. The processing means may be a digital processing means, since digital processing means (e.g. digital processing units) have been found to allow more accurate determination of whether an overload condition exists. The processing means may include one or more processing units and/or a central processing unit.

The processing means may be arranged to produce one or more signals representative of the thermal condition of a motor or other device based on one or more of the signals representative of current through the shunt resistors.

The signal(s) representative of the thermal condition of a motor or other device may be produced according to a thermal model of a motor or other device. A thermal model can be seen as a representation of the thermal capacity of a motor or other device. For example, a thermal model for a motor could be based on the value of I_{RMS}²t, where I_{RMS} is a signal representative of the root mean squared current through a shunt resistor and t is time. As another example, a thermal model for a motor could be based on the value of I_{RMS}^{2.77}t, which is thought to more accurately reflect the thermal response of a motor compared with the value of I_{RMS}²t. Thermal models are well known.

The processing means may be arranged to produce one or more signals representative of peak current through one or more of the shunt resistors based on one or more of the signals representative of current through the shunt resistors.

The processing means may be arranged to determine whether an overload condition exists based on the signal(s) representative of the thermal condition of a motor or other device. Optionally, the processing means may also be arranged to determine whether an overload condition exists based on the signal(s) representative of peak current. Determining whether an overload condition exists based on signal(s) representative of the thermal condition of a motor or other device helps in the determination of whether a motor or other device is thermally overloaded. Determining whether an overload condition exists based on signal(s) representative of peak current may be useful because a current imbalance between the supply lines of a power supply can lead to a motor becoming thermally overloaded.

In one preferred arrangement, the processing means includes a plurality of processing units, e.g. digital signal processors, each processing unit being located in a respective one of the measuring units. In other words, the processing means may be distributed between the measuring units.

Each processing unit located in a respective one of the measuring units may be arranged to produce a signal representative of the thermal condition of a motor or other device based on the signal representative of current through the shunt resistor to which the measuring unit is connected. The signal representative of the thermal condition of a motor may be produced according to a thermal model, e.g. by a modelling means.

Similarly, each processing unit located in a respective one of the measuring units may be arranged to produce a signal representative of peak current based on the signal representative of current through the shunt resistor to which the measuring unit is connected. The signal representative of peak current may be produced by a peak detector.

Each processing unit located in a respective one of the measuring units may be arranged to determine whether an overload condition exists based on the signal representative of current through the shunt resistor to which the measuring unit is connected. For example, each processing unit could determine whether an overload condition exists based on a signal representative of the thermal condition of a motor or other device and/or a signal representative of peak current produced by the same processing unit. The determination of whether an overload condition exists may be performed by a logic circuit.

One of the plurality of measuring units may a master measuring unit arranged to produce the trip signal. The one or more other measuring units may therefore be slave measuring units. In a preferred arrangement, each measuring unit is arranged to determine whether an overload condition exists and the master measuring unit is arranged to produce the trip signal if any of the measuring units determines that an overload condition exists. However, the determination of whether an overload condition exists could alternatively be carried out only by the master measuring unit, e.g. based on signal(s) representative of the thermal condition of a motor or other device. Optionally, the determination of whether an overload condition exists could also be carried out by the master measuring unit based on signal(s) representative of peak current from the measuring units. A master-slave arrangement may have the advantage of being low cost, e.g. because it can avoid use of a central processing unit.

The master measuring unit is preferably coupled to the other measuring unit(s) to allow signals to be transmitted between the measuring units. The coupling may be by one or more electrically isolating components, such as optical isolators, so that the measuring units can be electrically isolated from each other.

In another preferred arrangement, the processing means is a central processing unit (CPU) coupled to the measuring units. An advantage of this arrangement is that the CPU can carry out calculations which involve/combine the signals representative of current from all of the measuring units.

The CPU may be electrically isolated from the measuring units, e.g. to prevent the large voltages that may exist between the supply lines of the power supply from damaging the CPU. The CPU may therefore be coupled to the measuring units by one or more electrically isolating components, such as optical isolators and/or transformers.

The CPU may be coupled to an energy store for storing energy to power the CPU. This may enable the CPU to be powered when power from a source external to the CPU (e.g. from a power supply unit) is removed. If the CPU is powered from one of the supply lines (e.g. as described below), then having such an energy store may enable the CPU to continue to function when the continuity of the power supply is interrupted, e.g. for more than 10 or 15 minutes so as to allow the cooling of the motor or other device to be thermally modelled. The energy store may include a capacitor.

The CPU may be arranged to power the measuring units. The CPU may include an oscillator for powering the measuring units. The overload relay may include a plurality of transformers and the CPU may be arranged to power each of the measuring units through a respective one of the transformers. This arrangement may help to provide electrical isolation between the CPU and the measuring units.

The control means may be arranged to determine whether an overload condition exists based on an FLA value and/or a trip class of the overload relay, i.e. such that the overload relay has the tripping characteristics associated with that FLA value and/or trip class. As explained above, overload relays are usually classified according to their FLA value and trip class, which are both well known parameters.

The FLA value and/or trip class of the overload relay may be adjustable by a user. Therefore, a user is able to set the FLA value and/or trip class of the overload relay according to the requirements of a particular motor or other device that is to be used in combination with the overload relay. The FLA value may be adjustable over an FLA value range.

Although it is known to have overload relays which have adjustable FLA values, existing overload relays tend to have a very limited FLA value range, due to their using current transformers to measure current. This is because current transformers cannot usually measure currents over a wide range because they tend to saturate at high currents. The possible FLA values of electromechanical overload relays are even more restricted due to the need to use a different bimetal for each FLA value.

With the overload relay of the present invention, current is measured by shunt resistors which can typically measure currents over a wider range than an equivalent current transformer. Therefore, the overload relay of the present invention may have a wider FLA value range than previous overload relays which include current transformers. An overload relay according to the invention may, for example, have a maximum FLA value which is five or more times, or ten or more times larger than a minimum FLA value. This may allow, for example, a current range of 0.1A to 100A to be covered by three or four different overload relays according to the invention, e.g. using FLA value ranges of 0.1A to 1A, 1A to 10A, 3.7A to 37A and 6.3A to 100A. Typically, seven current transformer-based overload relays or nineteen bimetal-based overload relays would be needed to cover a range of 0.1A to 100A.

The tripping characteristics of the overload relay may be arranged to correspond to the FLA value and/or trip class of the overload relay in any suitable manner. For example, the tripping characteristics of the overload relay may be arranged to correspond to the FLA value of the overload relay by changing the gain of the amplification means in the measuring units. As another example, the tripping characteristics of the overload relay may be arranged to correspond to the trip class of the overload relay by suitable alteration of a thermal model used by the overload relay, e.g. by altering a time constant of the thermal model.

The control means may be arranged to produce a reset signal to restore the continuity of the power supply.

The control means may be arranged to produce the reset signal if it determines that an overload condition does not exist based on one or more of the signals representative of current through the shunt resistors. Where this is the case, the overload relay can be reset without manual intervention by a user. The control means may make this determination based on signal(s) representative of the thermal condition of the motor or other device and/or signal(s) based on peak current through the shunt resistor described above.

The overload relay may have an automatic mode and a manual mode. In the automatic mode, the control means may be arranged to produce the reset signal if it determines that an overload condition does not exist, e.g. as described above. In the manual mode, the control means may be arranged to produce the reset signal in response to user input. The control means may be adjustable/switchable between the automatic mode and the manual mode.

The overload relay may include a trip circuit arranged to interrupt the continuity of the power supply in response to the trip signal from the control means. The trip circuit may be arranged to restore the continuity of the power supply in response to a reset signal from the control means. The trip circuit may be arranged to interrupt/restore the continuity of the power supply via a contactor.

The control means may be coupled to the trip circuit by one or more electrically isolating components e.g. optical isolators, to allow a trip/reset signal from the processing means to be transmitted to the trip circuit whilst providing electrical isolation between the processing means and the trip circuit.

The trip circuit may include a bi-stable (i.e. latching) relay switchable between a first stable configuration for interrupting the continuity of the power supply and a second stable configuration for restoring the continuity of the power supply.

The trip circuit may include a trip capacitor for storing charge for switching the bi-stable relay into the first configuration. The trip circuit may include a reset capacitor for storing charge for switching the bi-stable relay into the second configuration. The trip and reset capacitors may be useful for avoiding a scenario where there is insufficient current/charge available elsewhere in the overload relay to switch the bi-stable relay.

The trip capacitor and/or reset capacitor may be protected from discharging. In other words, the trip capacitor and/or the reset capacitor may be protected from discharging in the event that a power supply to the capacitor is removed. This enables the trip circuit to switch the bi-stable relay in the event that a power supply to the capacitor is removed. It is particularly useful for the reset capacitor to be protected where the overload relay is powered from the same power supply as the motor or other device (see below), since the overload relay may stop receiving power from the power supply once the continuity of the power supply is interrupted.

The control means may be arranged to receive signals representative of voltages between the shunt resistors, e.g. by each measuring unit being connected to two or more of the shunt resistors. The control means may be arranged to calculate any one or more of: under/over voltage, real current, apparent current, power factor, and energy consumption based on the signals representative of voltages.

The control means may include one or more temperature sensors, e.g. for measuring any one or more of terminal temperature, shunt temperature, or local ambient temperature. Data from the temperature sensors could be used to provide other protection for the motor or other device, or to provide a warning to a user.

The shunt resistors may have a resistance of 1mΩ or less, to minimise power loss in the shunt resistors. The shunt resistors may have a resistance of 20µΩ or more, to ensure that the voltage across the shunt resistor is sufficient to be detected by the measuring units.

The power supply may be an AC power supply. The power supply may be a three-phase AC power supply having three supply lines, in which case the overload relay may suitably have three shunt resistors and optionally three measuring units.

The overload relay may include a power supply unit for supplying power to the overload relay. The power supply unit may be arranged to be powered from one or more supply lines of the power supply which powers the device it is protecting. The power supply unit may be as described in connection with the third aspect of the invention.

In a second aspect of the invention and according to claim 15, there is provided an apparatus having a motor or other device; a power supply having a plurality of supply lines for supplying power to the motor or other device; and an overload relay as described above, each shunt resistor of the overload relay being located in the current path of a respective supply line of the power supply.

In a further aspect, there is provided a power supply unit for supplying power to an overload relay, the power supply unit having:
a rectifier for producing a direct current from one or more supply lines of an AC power supply connected to a motor or other device protected by the overload relay; and
at least one transformer for coupling the power supply unit to the overload relay.

Accordingly, the overload relay can be powered from the power supply which powers the device it is protecting, such as a motor. This avoids the use of an external power supply for the overload relay.

The supply lines may have large voltages between them, which could therefore damage the overload relay. The transformer may therefore be useful because it can electrically isolate the power supply unit from the overload relay.

The power supply may have plural supply lines. It may have three supply lines, e.g. in the case of a three phase AC power supply.

Another advantage of using a rectifier in the power supply unit is that power can be supplied to the overload relay particularly quickly, so that the overload relay can have a fast startup time (i.e. the time it takes for the overload to begin operating after power is supplied to it). The overload relay may have a startup time of less than one second. A startup time of less than one second is not essential for providing overload protection, since overloads typically occur over periods longer than one second (e.g. tens of seconds). However, the overload relay could have other protective functions for which a startup time of less than one second may be highly desirable, e.g. ground fault protection, jam protection and/or stall protection.

The power supply unit may include one or more regulators for regulating the direct current produced by the rectifier. Regulators may be useful to smooth the direct current produced by the rectifier and/or to change (e.g. reduce) the voltage of the direct current produced by the rectifier.

The power supply unit may include an oscillator for supplying the overload relay with alternating current. The oscillator may be arranged to supply the overload relay with alternating current via one or more transformers.

The overload relay may include a rectifier, and optionally a regulator, for converting alternating current from the oscillator into direct current for use by the overload relay. The properties of the alternating current supplied to the overload relay can be chosen by selecting an appropriate oscillator, so as to match the requirements of the overload relay (e.g. rather than using alternating current directly from the supply lines of the power supply).

If the overload relay includes a plurality of measuring units, the oscillator may be coupled to each measuring unit by a respective transformer, since this can provide electrical isolation between the measuring. Each measuring unit may include a rectifier, and optionally a regulator, for converting alternating current from the oscillator into direct current for use by the measuring unit.

In a further aspect there is provided an overload relay for protecting a motor or other device from an overload condition, the overload relay having:
a shunt resistor locatable in the current path of a supply line of a power supply for the motor or other device; and
a control means connected to the shunt resistor and arranged to receive or produce a signal representative of current through the shunt resistor;
wherein the control means is arranged to produce a trip signal to interrupt the continuity of the power supply if it determines that an overload condition exists based on the signal representative of current through the shunt resistor.

Therefore, there may be provided an overload relay having only one shunt resistor, e.g. for protecting a motor or other device powered by a power supply having a single supply line, e.g. a single phase AC power supply. The overload relay may accordingly have any feature associated with the overload relay described above. In particular, the overload relay may have a measuring unit connected to the shunt resistor and arranged to receive a signal representative of current through the shunt resistor.

Optional and/or preferred features of any one aspect of the invention may be applied to any one of the other aspects. In addition, any one or more aspects of the invention may be combined with any other aspect.

Embodiments of our proposals are discussed below, with reference to the accompanying drawings in which:
Fig. 1 is a symbolic diagram of a first overload relay.
Fig. 2 is a schematic diagram of the first overload relay.
Fig. 3 is a schematic diagram of a measuring unit of the first overload relay.
Fig. 4 is a schematic diagram of a power supply unit of the first overload relay.
Fig. 5 is a schematic diagram of a second overload relay.
Fig. 6 is a schematic diagram of a power supply unit of the second overload relay.
Fig. 7 is a schematic diagram of a third overload relay.
Fig. 8 is a schematic diagram of an arrangement for using an overload relay to protect a motor.

Fig. 1 is a symbolic diagram of a first overload relay 101 for protecting a three-phase motor from a three-phase AC power supply. The overload relay 101 includes line terminations L, load terminations T, shunt resistors 110, a control means 120 and a trip circuit 150.

Fig. 2 shows the first overload relay 101 in more detail. The first overload relay 101 includes three line terminations L1, L2, L3, three load terminations T1, T2, T3 and three shunt resistors 110a, 110b, 110c which each connect one of the line terminations L1, L2, L3 to a respective one of the load terminations T1, T2, T3. The control means 120 of the first overload relay 101 includes three measuring units 122a, 122b, 122c and a input means 124. The first overload relay 101 further includes a trip circuit 150 and a power supply unit 160.

The line terminations L1, L2, L3 of the first overload relay 101 are connected to the supply lines of a three-phase AC power supply unit (not shown) and the load terminations T1, T2, T3 of the first overload relay 101 are connected to a three-phase induction motor (not shown). Because each of the three shunt resistors 110a, 110b, 110c connects one of the line terminations L1, L2, L3 to a respective one of the load terminations T1, T2, T3, each one of the shunt resistors 110a, 110b, 110c is located in a respective one of the supply lines of the power supply. The shunt resistors 110a, 110b, 110c are low ohmic resistors having a resistance in the range 20pQ to 1mΩ, to minimise power loss in the supply lines of the power supply.

Each measuring unit 122a, 122b, 122c is an application-specific integrated circuit (ASIC). Each measuring unit 122a, 122b, 122c is connected across a respective one of the shunt resistors 110a, 110b, 110c and is therefore arranged to receive a signal representative of voltage across, and consequently the current through, its respective shunt resistor 110a, 110b, 110c. Because each of the shunt resistors 110a, 110b, 110c is located in a supply line of the power supply, the signal representative of current through one of the shunt resistors 110a, 110b, 110c is also representative of current through a respective supply line of the power supply.

When the power supply is in use, there may be very large voltages between each supply line of the power supply. Because each measuring unit 122a, 122b, 122c is connected to a respective supply line of the power supply (via one of the shunt resistors 110a, 110b, 110c), the measuring units 122a, 122b, 122c have been electrically isolated from one another (i.e. no direct electrical connection or contact between them). This helps to prevent the large voltages that may exist between the supply lines of the power supply from damaging the measuring units 122a, 122b, 122c.

The three measuring units 122a, 122b, 122c are in a master/slave configuration, there being one master measuring unit 122b and two slave measuring units 122a, 122c. The master measuring unit 122b is arranged to produce a trip signal to interrupt the continuity of the three-phase power supply if it is determined that an overload condition exists based on signals representative of current through the shunt resistors 110a, 110b, 110c.

The measuring units 122a, 122b, 122c are coupled to one another by electrically isolating components, to allow signals, in this case digital signals, to be transmitted between them whilst maintaining electrical isolation between the measuring units 122a, 122b, 122c. In this embodiment, the measuring units are coupled together by optical isolators 126.

The input means 124 allows a user to adjust an FLA value, a trip class and a manual/automatic mode of the overload relay 101. The input means 124 is coupled to the master measuring unit 122b to enable an FLA value, trip class and/or manual/automatic mode input by a user to be transmitted to the master measuring unit 122b and also to the slave measuring units 122a, 122c (via the optical isolators 126), e.g. so that the overload relay 101 can adjust its tripping characteristics to correspond to an input FLA value and trip class.

The master measuring unit 122b is coupled to the trip circuit 150 so as allow trip/reset signals from the master measuring unit 122b to be transmitted to the trip circuit 150. In this embodiment the master measuring unit 122b is coupled to the trip circuit 150 by optical isolators 128 so as to electrically isolate the measuring units 122a, 122b, 122c from the trip circuit 150. The trip circuit 150 is arranged to interrupt the continuity of the power supply in response to a trip signal from the master measuring unit 122b and to restore the continuity of the power supply in response to a reset signal from the master measuring unit 122b.

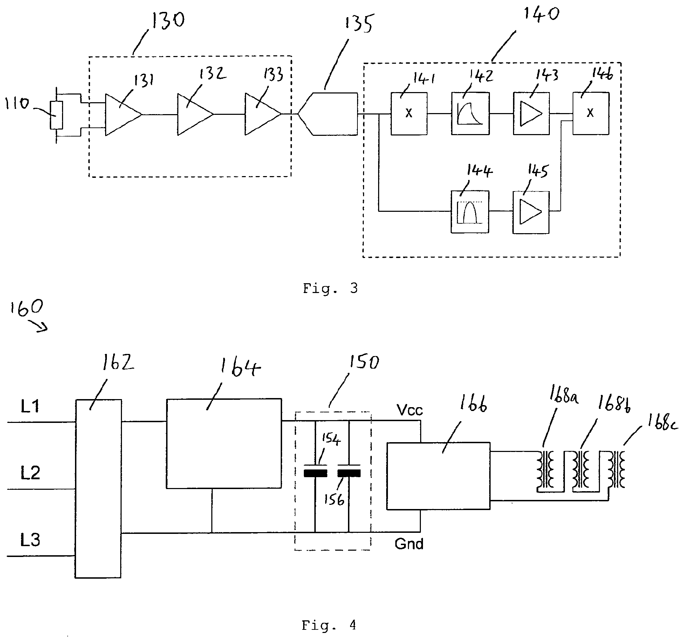

The trip circuit 150 include a trip/reset store 152 and a bi-stable relay 158. The trip/reset store 152 includes a trip capacitor 154 and a reset capacitor 156 for storing charge (these capacitors are illustrated in Fig. 4 which is described below).

The bi-stable relay 158 is switchable between a first stable configuration for interrupting the continuity of the power supply via a contactor (not shown) and a second stable configuration for restoring continuity of the power supply via the contactor. In the first stable configuration, the bi-stable relay 158 does not supply current to the contactor so that the continuity of the power supply is interrupted by the contactor. In the second stable configuration the bi-stable relay 158 supplies current to the contactor (not shown) so that the contactor provides continuity to a power supply (not shown). In this example, the bi-stable relay 158 sources its current from the supply lines coming into the contactor (not shown).

The trip capacitor 154 is arranged to discharge to the bi-stable relay 158 via a trip line 155 if the master measuring unit 122b produces a trip signal, so as to switch the bi-stable relay 158 from the second configuration into the first configuration. The reset capacitor 156 is arranged to discharge to the bi-stable relay 158 via a reset line 157 if the master measuring unit 122b produces a reset signal. The presence of the capacitors 154, 156 helps to avoid a scenario where there is insufficient current/charge elsewhere in the overload relay to trip/reset the bi-stable relay 158.

The bi-stable relay 158 includes a test button 159a and a reset button 159b for manually switching the bi-stable relay 158 into the first and second configurations respectively.

The power supply unit 160 powers the measuring units 122a, 122b, 122c and trip circuit 150 and is described in more detail below with reference to Fig. 4.

Fig. 3 shows one of the measuring units 122 in more detail. The measuring unit 122 includes an amplification means 130, an analogue to digital converter 135 and a processing unit 140.

The amplification means 130 includes a first amplifier 131, a second amplifier 132 and a third amplifier- 133. The first amplifier 131 is connected across a shunt resistor 110 and is arranged to amplify the voltage across the shunt resistor 110. The second amplifier 132 amplifies the output of the first amplifier 131, and the third amplifier 133 amplifies the output of the second amplifier 132.

According to the equation V = IR, the voltage across the shunt resistor 110 is proportional to, and therefore representative of, the current flowing through the shunt resistor 110. Therefore, the output of each amplifier 131, 132, 133 in the amplification means 130 is a signal representative of the current through the shunt resistor 110, and therefore representative of the current through a respective supply line of the three-phase power supply.

The first amplifier 131 is a fixed-gain amplifier. In this embodiment the fixed gain first amplifier 131 is bandwidth limited (2kHz). Because the resistance of the shunt resistor 110 is typically very small (e.g. 20µΩ to 1mΩ), the voltage across the shunt resistor 110 is also very small. Therefore, the first amplifier 131 is used to amplify the voltage across the shunt resistor 110 so that it can more easily be converted into a digital signal.

The second amplifier 132 and the third amplifier 134 are programmable gain amplifiers. Their functions are described in more detail below.

The analogue to digital converter 135 converts the signal representative of current through the shunt resistor 110 from the amplification means 130 into a digital signal. A suitable analogue to digital converter 135 may be a 12 bit converter which samples at 4 KHz. A band-gap reference is provided to the analogue to digital converter 135 to act as a voltage reference so that the analogue to digital converter can measure bi-polar voltage signals.

The processing unit 140 processes the signal representative of current through the shunt resistor 110 from the analogue to digital converter 135. The processing unit 140 includes two processing branches which lead to a trip/reset logic 146. The first branch of the processing unit 140 includes a multiplication means 141, a modelling means 142 and a first threshold detector 143. The second branch of the processing unit 140 includes a peak detector 144 and a second threshold detector 145.

The multiplication means 141 is arranged to produce a signal representative of the mean squared current through the shunt resistor 110 based on the signal representative of current through the shunt resistor 110 from the analogue to digital converter 135. In one embodiment, the multiplication means 141 may include a digital multiplier combined with a first order low-pass digital filter.

The modelling means 142 is arranged to produce a signal representative of the thermal condition of the motor based on the signal representative of the mean squared current through the shunt resistor 110 from the multiplication means 141. The modelling means 142 produces the signal representative of the thermal condition of the motor according to a thermal model of the motor. A thermal model of the motor can be seen as a representation of the motor's thermal capacity. Such thermal models are well known.

In this embodiment, the signal representative of the thermal condition of the motor is based on the value of I_{RMS}²t, where I_{RMS} is the signal representative of mean squared current from the multiplication means 141 and t is time. In another embodiment the signal representative of the thermal condition of the motor is based on the value of I_{RMS}^{2.77}t, which is thought to more accurately model the thermal response of a motor but can be more computationally intensive.

The first threshold detector 143 is arranged to compare the signal representative of the thermal condition of the motor with a first threshold value. If the signal representative of the thermal condition of the motor is greater than the first threshold value, then a signal indicating that the first threshold has been exceeded is produced by the first threshold detector 143. A signal indicating that the first threshold has been exceeded from the first threshold detector 143 is indicative of a thermally overloaded motor.

The peak detector 144 is arranged to produce a signal representative of the peak current through the shunt resistor 110 based on the signal representative of current through the shunt resistor 110 from the analogue to digital converter 135.

The second threshold detector 145 is arranged to compare the signal representative of the peak current through the shunt resistor 110 with a second threshold value. If the signal representative of peak current is less than the second threshold value, then a signal indicating that the peak current is below the second threshold is produced. The second threshold value may, for example be 70% or 20% of the FLA value of the first overload relay 101. A signal indicating that the peak current is below the second threshold from the second threshold detector 145 is therefore indicative of one of the supply lines having a reduced or zero current flow, which may lead to the motor becoming thermally overloaded due to current imbalance between the supply lines.

The trip/reset logic 146 is arranged to determine whether an overload condition exists based on the signal representative of current through the shunt resistor 110. In this particular embodiment, the trip/reset logic 146 achieves this by determining that an overload condition exists if it receives a signal indicating that the first threshold has been exceeded from the first threshold detector 143 or if it receives a signal indicating that the peak current is below the second threshold from the second threshold detector 145. The trip/rest logic 146 is arranged to produce a signal indicating that an overload condition exists if it determines that an overload condition exists.

In alternative embodiment, the modelling means 142 and peak detector 144 may be arranged to produce a signal indicating the state of the power supply, e.g. indicating one of a plurality of states such as loss of a supply line, supply line present with low power, normal operation and/or thermal overload. These signals could then be used by the trip/reset logic 146 in determining whether an overload condition exist.

If the trip/reset logic 146 of the master measuring unit 122b determines that an overload condition exists or receives a signal indicating that an overload condition exists from the trip/reset logic of any of the slave measuring units 122a, 122c, the master measuring unit 122b produces a trip signal to interrupt the continuity of the three-phase power supply. This signal is transmitted to the trip circuit 150 as explained above.

As explained above, the overload relay 101 has an automatic mode and a manual mode. In the automatic mode, the master measuring unit 122b is arranged to produce a reset signal when it determines that an overload condition does not exist (e.g. because the motor has cooled). Therefore, the automatic mode can be used to allow continuity of the power supply when an overload condition does not exist. In the manual mode, the master measuring unit 122b only produces the reset signal in response to user input. The continuity of the three-phase power supply can also be restored manually using the reset button 159b described above.

Each one of the measuring units 122a, 122b, 122c includes an energy store (not shown) for powering the measuring units if the continuity of the three-phase power supply has been interrupted (e.g. due to a trip signal from the master measuring unit 122b). This enables the thermal model in each of the measuring units 122a, 122b, 122c to be maintained even when the three-phase power supply has been interrupted (e.g. which may be required for overload relay 101 to function correctly in the automatic mode). The energy store of each measuring unit preferably stores enough energy for the measuring unit to be powered for at least 15 minutes, to allow the thermal model in each of the measuring units to be updated whilst the motor is still cooling. The energy store may be a capacitor which is charged by the power supply unit 160.

As explained above, the overload relay 101 has an FLA value which is adjustable by a user via input means 124. Each master measuring unit 122a, 122b, 122c is arranged to determine whether an overload condition exists based on the FLA value of the overload relay 101, i.e. such that the overload relay 101 has the tripping characteristics associated with that FLA value. In this embodiment, the tripping characteristics of the overload relay are arranged to correspond to the FLA value of the overload relay by changing the gain of the second amplifier 132 of the amplification means 150 such that the output of the amplification means 150 is always the same when the current through the shunt resistor 110 equals the FLA value of the overload relay 101. For example, if the FLA value range of the overload relay is 0.5A to 5A, then the amplification provided by the amplification means 130 will be 10 times more for the FLA value of 0.5A then it would for the FLA value of 5A.

The third amplifier 133 is used for range selection. The gain of the third amplifier is adjustable to allow the gain of the amplification means 130 to be adjusted to account for the resistance of the shunt resistor 110 being used, such that the output of the amplification means is always the same when the current through the shunt resistor is equal to the FLA value of the overload relay 101, irrespective of the particular shunt resistor being used.

As explained above, the overload relay 101 has a trip class which is adjustable by a user via input means 124. Each master measuring unit 122a, 122b, 122c is arranged to determine whether an overload condition exists based on the trip class of the overload relay 101, i.e. such that the overload relay 101 has the tripping characteristics associated with that trip class. In this embodiment, the tripping characteristics of the overload relay are arranged to correspond to the trip class of the overload relay by appropriate adjustment of the thermal models used by the measuring units 122a, 122b, 122c, e.g. by changing the time constant of the thermal models.

Fig. 4 shows the power supply unit 160 in more detail. The power supply unit 160 includes three line terminals L1, L2, L3, a rectifier 162, a regulator 164, the trip capacitor 154 and reset capacitor 156 of the trip circuit 150, an oscillator 166 and three isolation transformers 168a, 168b, 168c.

The line terminals L1, L2, L3 are connected to the three supply lines of the three-phase AC power supply. The rectifier 162 is arranged to produce a direct current from the alternating currents in the three supply lines of the power supply. Preferably, the rectifier 162 is arranged so that in the event of one or more of the supply lines of the power supply being lost, the rectifier 162 can still produce a direct current from the remaining supply lines. The regulator 164 is used to smooth the rectified direct current from the rectifier 162.

As can be seen from Fig. 4, the rectified direct current is used to charge the trip capacitor 154 and the reset capacitor 156 of the trip circuit 150.

The reset capacitor 156 (and/or the trip capacitor 154) may be protected such that it does not discharge when the continuity of the three-phase power supply is interrupted (e.g. for at least 2 minutes). This enables the reset capacitor 156 to be used to restore the continuity of the three-phase power supply even if the continuity of the three-phase power supply has been interrupted. The trip capacitor 154 and the reset capacitor 156 may be 1mF capacitors.

The oscillator 166 is powered using the direct current from the rectifier 162 and regulator 164. The oscillator 166 supplies the measuring units 122a, 122b, 122c with alternating current.

In order to electrically isolate the power supply unit 160 from the measuring units 122a, 122b, 122c, the alternating current from the oscillator 166 is supplied to the measuring units 122a, 122b, 122c via three transformers 168a, 168b, 168c. Each one of the measuring units 122a, 122b, 122c includes a rectifier and a regulator (not shown) for converting the alternating current from the oscillator 166 into direct current for use by the measuring unit.

The inductance in the transformers 168a, 168b, 168c may be low. Therefore, the transformers 168a, 168b, 168c may not be able to output a useful amount of current were low frequency AC current (such as the 50/60Hz AC current typically found in mains electricity supply lines) to be supplied thereto. To avoid this problem, the alternating current supplied by the oscillator 166 may have a higher frequency than mains electricity, e.g. 1 MHz or higher. The transformers 168a, 168b, 168c may have windings whose capacitance is small so reducing the chance of circulating currents flowing.

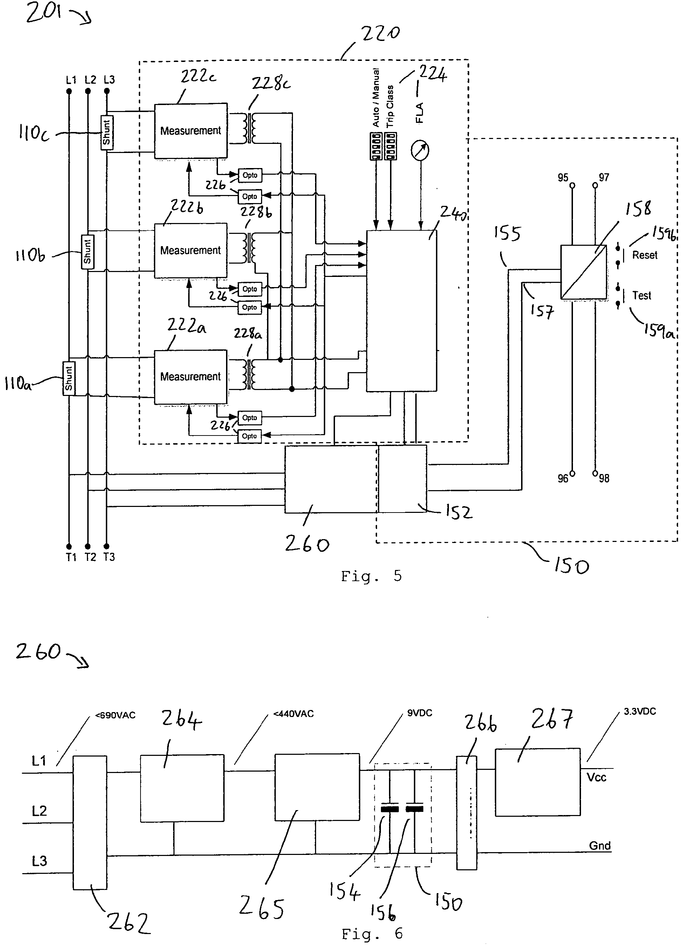

Fig. 5 shows a second overload relay 201. The second overload relay 201 shares many of the features of the first overload relay 101 and has been numbered accordingly. These features will not be discussed in further detail.

The second overload relay 201 includes a control means 220 which includes a central processing unit (CPU) 240 arranged to determine whether an overload condition exists based on the signals representative of current through the shunt resistors 110a, 110b, 110c. The CPU 240 is coupled to three measuring units 222a, 222b, 222c by optical isolators 226 so as to prevent high voltages between the supply lines of the three-phase power supply from damaging the central processing unit 240. The CPU 240 and trip circuit 150 of the second overload relay are powered by a power supply unit 260.

Isolation is not required between the CPU 240 and the trip/reset circuit 150 because these elements sit at a common voltage with respect to the power supply unit 260.

The measuring units 222a, 222b, 222c of the second overload relay 201 include an amplification means and an analogue to digital converter similar to those shown in Fig. 3. However, the measuring units 222a, 222b, 222c of the second overload relay 201 do not include a processing units, since the processing of the second overload relay 201 is carried out by the CPU 240.

The determination of whether an overload condition exists by the CPU 240 is similar to that carried out by the trip/reset logics 146 of the first overload relay. For example, the CPU 240 produces a signal representative of the peak current through each shunt resistor 110a, 110b, 110c. However, in contrast to the trip/reset logics 146 of the first overload relay 101, the CPU 240 only produces only one signal representative of the thermal condition of the motor based on all the signals representative of current through the shunt resistors 110a, 110b, 110c. This permits a more accurate modelling of the thermal condition of the motor (although may require more computational power).

The CPU 240 may have more computational power than the processing means 150 provided on the measuring units 122a, 122b, 122c of the first overload relay 101. This may allow the CPU 240 to use a more computationally intensive, but more accurate, thermal model than the measuring units 122a, 122b, 122c of the first overload relay 101. Increased computational power may also allow further parameters to be calculated. Also, using a CPU 240 may allow the thermal model used in the CPU 240 to be adjusted during installation of the second overload relay 201.

The second overload relay 201 includes an input means 224 coupled to the CPU 240, to allow a user to adjust an FLA value, trip class and manual/automatic mode of the second overload relay 201. Similarly to the first overload relay 101, the second overload relay 201 determines whether an overload condition exists based on the FLA value and the trip class. Similarly to the first overload relay 101, in the automatic mode of the second overload relay 201, the CPU 240 is arranged to produce a reset signal if it determines that an overload condition does not exist.

The central processing unit 240 is used to power the measuring channels 222a, 222b, 222c. An AC current is supplied by an oscillator in the central processing unit 240 to each of the measuring units 222a, 222b, 222c via a respective transformer 268a, 268b, 268c (see Fig. 5), to provide electrical isolation. As with the measuring channels 122a, 122b, 122c of the first overload relay 101, each one of the measuring units 222a, 222b, 222c of the second overload relay 201 includes a rectifier and a regulator (not shown) in order to convert the alternating current from the central processing unit 240 into direct current for powering the measuring unit.

The central processing unit 240 may provide a synchronisation signal (via the optical isolators 226) to the measuring units 222a, 222b, 222c to ensure that the analogue to digital converters of the measuring units 222a, 222b, 222c are sampling simultaneously.

Fig. 6 shows the power supply unit 260 of the second overload relay 201 in more detail. The power supply unit 260 includes three line terminals L1, L2, L3, a rectifier 262, a first regulator 264, a second regulator 265, a transformer 266 and output regulator 267. As shown in Fig. 6, the power supply unit 260 is coupled to the trip capacitor 154 and the reset capacitor 156 of the trip circuit 150.

The line terminals L1, L2, L3 are connected to the three supply lines of the power supply. The rectifier 262 is arranged to produce a direct current from the alternating currents in the three supply lines of the power supply. Preferably, the rectifier 262 is arranged so that in the event of one or more of the supply lines of the power supply being lost, the rectifier 262 can still produce a direct current from the remaining supply lines.

The first regulator 264 is a simple linear regulator which outputs a direct current that is limited to 440V. The second regulator 265 outputs a direct current which is limited to 9V.

The second regulator 265 provides a significant current gain and therefore allows much higher current output capability. However, the output from the second regulator 265 may not be sufficient to switch the bi-stable relay 258 of the trip circuit 250. Therefore, the trip capacitor 154 and the reset capacitor 156 of the trip circuit 150 are charged from the output of the second regulator 265 so that the stored charge can be used to switch the bi-stable relay.

The transformer 266 is present to electrically isolate the central processing unit 240 from the supply lines of the power supply.

The output of the output regulator 267 is limited to 3.3V for supplying the central processing unit 240 with power. Large storage capacitors (not shown) can used to ensure that the supply to the central processing unit is maintained for up to 15 minutes after the continuity of the power supply has been interrupted, to ensure that the central processing unit 240 is able to maintain its thermal model.

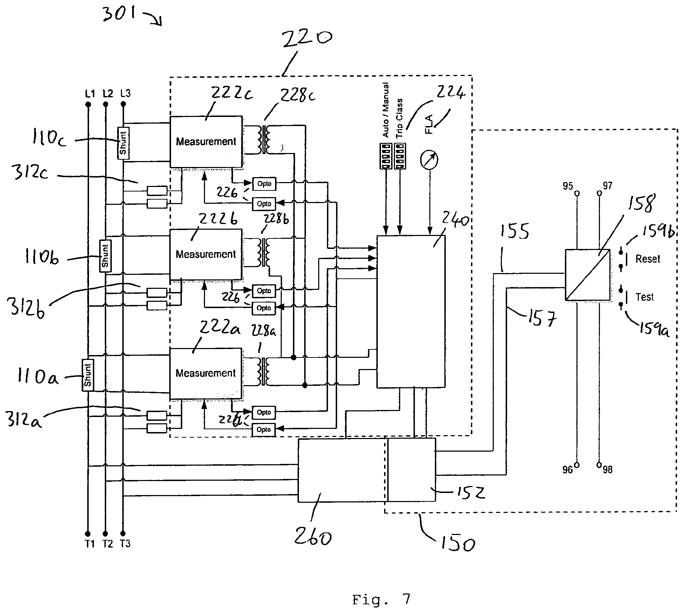

Fig. 7 shows a third overload relay 301. The third overload relay 301 shares many of the features of the second overload relay 201 and has been numbered accordingly.

Each one of the measuring units 222a, 222b, 222c of the third overload relay 301 is connected to a respective one of the shunt resistors 110a, 110b, 110c and also to and adjacent one of the shunt resistors 110a, 110b, 110c by a respective pair of resistors 312a, 312b, 312c to form simple voltage dividers. This arrangement enables each of the measurement units 222a, 222b, 222c to receive a signal representative of the voltage between an adjacent pair of supply lines of the power supply. These signals can then be transmitted to the central processing unit 240 via optical isolators 228 (e.g. by multiplexing the signal representative of voltage with the signal representative of current).

Using the signals representative of currents in, and voltages between, the supply lines of the three-phase power supply, the central processing unit 240 may able to calculate additional parameters of the three-phase power supply, such as under/over voltage, real and apparent current, power factor, and energy consumption.

One of ordinary skill after reading the foregoing description will be able to affect various changes, alterations, and subtractions of equivalents without departing from the broad concepts disclosed. It is therefore intended that the scope of the patent granted hereon be limited only by the appended claims, as interpreted with reference to the description and drawings, and not by limitation of the embodiments described herein. In particular, although overload relays have been described herein with reference to protecting motors, the overload relays could also be used to protect other devices, e.g. a kettle.

## Claims

1. An overload relay (101, 201, 301) for protecting a motor or other device from an overload condition, the overload relay having:
a plurality of shunt resistors (110, 110a, 110b, 110c), each shunt resistor being locatable in the current path of a respective supply line of a power supply for the motor or other device; and
a control means (120) connected to each of the shunt resistors and arranged to receive signals representative of current through each of the shunt resistors;
wherein the control means is arranged to determine a thermal condition of the motor or the other device based on one or more of the one or more signals representative of current through the shunt resistors and according to a thermal model of the motor or other device, and to produce a trip signal to interrupt the continuity of the power supply if it determines that an overload condition exists based on the thermal condition.

2. An overload relay according to claim 1, wherein the control means includes:
a plurality of measuring units (122, 222), each measuring unit being connected to a respective one of the shunt resistors and arranged to receive a signal representative of current through the shunt resistor to which it is connected; and
a processing means arranged to determine whether the overload condition exists based on the thermal condition.

3. An overload relay according to claim 2, the processing means including a plurality of processing units (140), each processing unit being located in a respective measuring unit, wherein each processing unit is arranged to produce:
a signal representative of the thermal condition of the motor or other device based on the signal representative of current through the shunt resistor to which the measuring unit is connected; and
a signal representative of peak current based on the signal representative of current through the shunt resistor to which the measuring unit is connected.

4. An overload relay according to claim 3 wherein each processing unit includes two processing branches, the first processing branch including:
a multiplication means (141) arranged to produce a signal representative of the mean squared current through a respective shunt resistor;
a modelling means (142) arranged to produce the signal representative of the thermal condition of the motor based on the signal representative of the mean squared current through the respective shunt resistor; and
a first threshold detector (143) arranged to compare the signal representative of the thermal condition of the motor with a first threshold value and, if the signal representative of the thermal condition of the motor is greater than the first threshold value, to produce a signal indicative of a thermally overloaded motor;
the second processing branch including:
a peak detector (144) arranged to produce the signal representative of peak current through the respective shunt resistor; and
a second threshold detector (145) arranged to compare the signal representative of peak current with a second threshold value and, if the signal representative of peak current is less than the second threshold value, to produce a signal indicative of a supply line having reduced or zero current flow.

5. An overload relay according to any one of claims 3 to 4, wherein each processing unit is arranged to determine whether an overload condition exists based on a thermal condition of the motor or other device determined based on the signal representative of current through the shunt resistor to which the measuring unit is connected.

6. An overload relay according to any one of claims 3 to 5 wherein one of the plurality of measuring units is a master measuring unit (122b) arranged to produce the trip signal.

7. An overload relay according to claim 6 wherein the master measuring unit is coupled to the one or more other measuring units (122a, 122c) by one or more electrically isolating components (126).

8. An overload relay according to claim 2, the processing means being a central processing unit (240) coupled to the measuring units.

9. An overload relay according to any one of the claims 2 to 8, wherein each measuring unit includes an energy store for storing energy to power the measuring unit.

10. An overload relay according to any one of the previous claims wherein the overload relay includes a trip circuit (150) arranged to interrupt the continuity of the power supply in response to the trip signal from the control means and arranged to restore the continuity of the power supply in response to a reset signal from the control means, wherein the trip circuit includes:
a bi-stable relay switchable between a first stable configuration for interrupting the continuity of the power supply and a second stable configuration for restoring the continuity of the power supply;
a trip capacitor for storing charge for switching the bi-stable relay into the first configuration; and
a reset capacitor for storing charge for switching the bi-stable relay into the second configuration
wherein the trip capacitor and reset capacitor are protected from discharging.

11. An overload relay according to any one of the previous claims wherein the control means is arranged to receive signals representative of voltages between the shunt resistors.

12. An overload relay according to any one of the previous claims wherein the overload relay includes a power supply unit for supplying power to the overload relay, the power supply unit having:
a rectifier for producing a direct current from one or more supply lines of an AC power supply connected to a motor or other device protected by the overload relay; and
at least one transformer for coupling the power supply unit to the overload relay.

13. An overload relay according to claim 12 wherein the power supply unit includes one or more regulators for regulating the direct current produced by the rectifier.

14. An overload relay according to claim 12 or 13 wherein the power supply unit includes an oscillator for supplying the overload relay with alternating current, wherein optionally the overload relay includes a rectifier for converting alternating current from the oscillator into direct current for use by the overload relay, wherein optionally the overload relay includes a plurality of measuring units and a plurality of transformers, the oscillator being coupled to each measuring unit by a respective transformer, and wherein optionally each measuring unit includes a rectifier for converting alternating current from the oscillator into direct current for use by the measuring unit.

15. An apparatus having:
a motor or other device;
a power supply having a plurality of supply lines for supplying power to the motor or other device; and
an overload relay according to any one of the previous claims, each shunt resistor of the overload relay being located in the current path of a respective supply line of the power supply.

## Patentansprüche

1. Überlastrelais (101, 201, 301) zum Schützen eines Motors oder einer anderen Vorrichtung vor einem Überlastzustand, wobei das Überlastrelais aufweist:
eine Vielzahl von Nebenschlusswiderständen (110, 110a, 110b, 110c), wobei jeder Nebenschlusswiderstand im Strompfad einer jeweiligen Versorgungsleitung einer Leistungsversorgung für den Motor oder eine andere Vorrichtung lokalisierbar ist; und
ein Steuermittel (120), das mit jedem der Nebenschlusswiderstände verbunden ist und angeordnet ist, Signale zu empfangen, die repräsentativ für Strom durch jeden der Nebenschlusswiderstände sind;
wobei das Steuermittel angeordnet ist, einen thermischen Zustand des Motors oder der anderen Vorrichtung basierend auf einem oder mehreren des einen oder der mehreren Signale, die repräsentativ für Strom durch die Nebenschlusswiderstände sind, und gemäß einem thermischen Modell des Motors oder der anderen Vorrichtung zu bestimmen und ein Auslösesignal zu erzeugen, um die Kontinuität der Leistungsversorgung zu unterbrechen, wenn es bestimmt, dass basierend auf dem thermischen Zustand ein Überlastzustand vorliegt.

2. Überlastrelais nach Anspruch 1, wobei das Steuermittel beinhaltet:
eine Vielzahl von Messeinheiten (122, 222), wobei jede Messeinheit mit einem jeweiligen der Nebenschlusswiderstände verbunden ist und angeordnet ist, ein für Strom durch den Nebenschlusswiderstand repräsentatives Signal zu empfangen, mit dem sie verbunden ist; und
ein Verarbeitungsmittel, das angeordnet ist zu bestimmen, ob der Überlastzustand basierend auf dem thermischen Zustand vorliegt.

3. Überlastrelais nach Anspruch 2, wobei das Verarbeitungsmittel eine Vielzahl von Verarbeitungseinheiten (140) beinhaltet, wobei sich jede Verarbeitungseinheit in einer jeweiligen Messeinheit befinden, wobei jede Verarbeitungseinheit angeordnet ist, Folgendes zu erzeugen:
ein Signal, das repräsentativ für den thermischen Zustand des Motors oder einer anderen Vorrichtung ist, basierend auf dem Signal, das repräsentativ für den Strom durch den Nebenschlusswiderstand ist, an den die Messeinheit angeschlossen ist; und
ein Signal, das repräsentativ für Spitzenstrom ist, basierend auf dem Signal, das repräsentativ für Strom durch den Nebenschlusswiderstand ist, an den die Messeinheit angeschlossen ist.

4. Überlastrelais nach Anspruch 3, wobei jede Verarbeitungseinheit zwei Verarbeitungszweige beinhaltet, wobei der erste Verarbeitungszweig Folgendes beinhaltet:
ein Multiplikationsmittel (141), das angeordnet ist, ein Signal zu erzeugen, das repräsentativ für den mittleren quadratischen Strom durch einen jeweiligen Nebenschlusswiderstand ist;
ein Modellierungsmittel (142), das angeordnet ist, das Signal zu erzeugen, das repräsentativ für den thermischen Zustand des Motors ist, basierend auf dem Signal, das repräsentativ für den mittleren quadratischen Strom durch den jeweiligen Nebenschlusswiderstand ist; und
einen ersten Schwellwertdetektor (143), der angeordnet ist, das Signal, das repräsentativ für den thermischen Zustand des Motors ist, mit einem ersten Schwellwert zu vergleichen und, wenn das Signal, das repräsentativ für den thermischen Zustand des Motors ist, größer als der erste Schwellwert ist, ein Signal zu erzeugen, das einen thermisch überlasteten Motor anzeigt;
wobei der zweite Verarbeitungszweig Folgendes beinhaltet:
einen Spitzenwertdetektor (144), der angeordnet ist, das Signal zu erzeugen, das repräsentativ für Spitzenstrom durch den jeweiligen Nebenschlusswiderstand ist; und
einen zweiten Schwellwertdetektor (145), der angeordnet ist, das Signal, das repräsentativ für Spitzenstrom ist, mit einem zweiten Schwellwert zu vergleichen und, wenn das Signal, das repräsentativ für Spitzenstrom ist, kleiner als der zweite Schwellwert ist, ein Signal zu erzeugen, das eine Versorgungsleitung mit verringertem oder Nullstromfluss angibt.

5. Überlastrelais nach einem der Ansprüche 3 bis 4, wobei jede Verarbeitungseinheit angeordnet ist zu bestimmen, ob ein Überlastzustand basierend auf einem thermischen Zustand des Motors oder der anderen Vorrichtung vorliegt, der basierend auf dem Signal bestimmt wird, das repräsentativ für Strom durch den Nebenschlusswiderstand ist, an den die Messeinheit angeschlossen ist.

6. Überlastrelais nach einem der Ansprüche 3 bis 5, wobei eine der Vielzahl von Messeinheiten eine Master-Messeinheit (122b) ist, die angeordnet ist, das Auslösesignal zu erzeugen.

7. Überlastrelais nach Anspruch 6, wobei die Master-Messeinheit mit der einen oder den mehreren anderen Messeinheiten (122a, 122c) durch eine oder mehrere elektrisch isolierende Komponenten (126) gekoppelt ist.

8. Überlastrelais nach Anspruch 2, wobei die Verarbeitungsmittel eine mit den Messeinheiten gekoppelte Zentralverarbeitungseinheit (240) sind.

9. Überlastrelais nach einem der Ansprüche 2 bis 8, wobei jede Messeinheit einen Energiespeicher zum Speichern von Energie zur Leistungsversorgung der Messeinheit beinhaltet.

10. Überlastrelais nach einem der vorstehenden Ansprüche, wobei das Überlastrelais eine Auslöseschaltung (150) beinhaltet, die angeordnet ist, die Kontinuität der Leistungsversorgung als Reaktion auf das Auslösesignal von dem Steuermittel zu unterbrechen, und die angeordnet ist, die Kontinuität der Leistungsversorgung als Reaktion auf ein Rückstellsignal von dem Steuermittel wiederherzustellen, wobei die Auslöseschaltung Folgendes beinhaltet:
ein bistabiles Relais, das zwischen einer ersten stabilen Konfiguration zum Unterbrechen der Kontinuität der Leistungsversorgung und einer zweiten stabilen Konfiguration zum Wiederherstellen der Kontinuität der Leistungsversorgung umschaltbar ist;
einen Auslösekondensator zum Speichern der Ladung zum Schalten des bistabilen Relais in die erste Konfiguration; und
einen Rückstellkondensator zum Speichern der Ladung zum Schalten des bistabilen Relais in die zweite Konfiguration,
wobei der Auslösekondensator und der Rückstellkondensator gegen Entladung geschützt sind.

11. Überlastrelais nach einem der vorstehenden Ansprüche, wobei das Steuermittel angeordnet ist, Signale zu empfangen, die repräsentativ sind für Spannungen zwischen den Nebenschlusswiderständen sind.

12. Überlastrelais nach einem der vorstehenden Ansprüche, wobei das Überlastrelais eine Leistungsversorgungseinheit zum Versorgen des Überlastrelais mit Leistung beinhaltet, wobei die Leistungsversorgungseinheit aufweist:
einen Gleichrichter zum Erzeugen eines Gleichstroms aus einer oder mehreren Versorgungsleitungen einer Wechselstromleistungsversorgung, die mit einem Motor oder einer anderen Vorrichtung verbunden ist, die durch das Überlastrelais geschützt ist; und
mindestens einen Transformator zum Koppeln der Leistungsversorgungseinheit mit dem Überlastrelais.

13. Überlastrelais nach Anspruch 12, wobei die Leistungsversorgungseinheit einen oder mehrere Regler zum Regeln des durch den Gleichrichter erzeugten Gleichstroms beinhaltet.

14. Überlastrelais nach Anspruch 12 oder 13, wobei die Leistungsversorgungseinheit einen Oszillator zum Versorgen des Überlastrelais mit Wechselstrom beinhaltet, wobei das Überlastrelais optional einen Gleichrichter zum Umwandeln von Wechselstrom aus dem Oszillator in Gleichstrom zur Verwendung durch das Überlastrelais beinhaltet, wobei das Überlastrelais optional eine Vielzahl von Messeinheiten und eine Vielzahl von Transformatoren beinhaltet, wobei der Oszillator mit jeder Messeinheit durch einen jeweiligen Transformator gekoppelt ist, und wobei optional jede Messeinheit einen Gleichrichter zum Umwandeln von Wechselstrom aus dem Oszillator in Gleichstrom zur Verwendung durch die Messeinheit beinhaltet.

15. Einrichtung, aufweisend:
einen Motors oder eine andere Vorrichtung;
eine Leistungsversorgung aufweisend eine Vielzahl von Versorgungsleitungen zur Leistungsversorgung des Motors oder einer anderen Vorrichtung; und
ein Überlastrelais nach einem der vorstehenden Ansprüche, wobei sich jeder Nebenschlusswiderstand des Überlastrelais im Strompfad einer jeweiligen Versorgungsleitung der Leistungsversorgung befindet.

## Revendications

1. Relais de surcharge (101, 201, 301) pour protéger un moteur ou un autre dispositif contre une condition de surcharge, le relais de surcharge ayant :
une pluralité de résistances de dérivation (110, 110a, 110b, 110c), chaque résistance de dérivation pouvant être positionnée dans le trajet de courant d'une ligne d'alimentation respective d'une alimentation électrique pour le moteur ou un autre dispositif ; et
un moyen de commande (120) connecté à chacune des résistances de dérivation et agencé pour recevoir des signaux représentatifs de courant à travers chacune des résistances de dérivation ;
dans lequel le moyen de commande est agencé pour déterminer une condition thermique du moteur ou de l'autre dispositif sur la base d'un ou de plusieurs des un ou plusieurs signaux représentatifs de courant à travers les résistances de dérivation et selon un modèle thermique du moteur ou de l'autre dispositif, et de produire un signal de déclenchement pour interrompre la continuité de l'alimentation s'il détermine l'existence d'une condition de surcharge sur la base de la condition thermique.

2. Relais de surcharge selon la revendication 1, dans lequel le moyen de commande inclut :
une pluralité d'unités de mesure (122, 222), chaque unité de mesure étant connectée à l'une respective des résistances de dérivation et agencée pour recevoir un signal représentatif de courant à travers la résistance de dérivation à laquelle elle est connectée ; et
un moyen de traitement agencé pour déterminer si la condition de surcharge existe sur la base de la condition thermique.

3. Relais de surcharge selon la revendication 2, le moyen de traitement incluant une pluralité d'unités de traitement (140), chaque unité de traitement étant située dans une unité de mesure respective, dans lequel chaque unité de traitement est agencée pour produire :
un signal représentatif de la condition thermique du moteur ou d'un autre dispositif sur la base du signal représentatif de courant à travers la résistance de dérivation à laquelle l'unité de mesure est connectée ; et
un signal représentatif de courant de crête sur la base du signal représentatif de courant à travers la résistance de dérivation à laquelle l'unité de mesure est connectée.

4. Relais de surcharge selon la revendication 3, dans lequel chaque unité de traitement inclut deux branches de traitement, la première branche de traitement incluant :
un moyen de multiplication (141) agencé pour produire un signal représentatif du courant quadratique moyen à travers une résistance de dérivation respective ;
un moyen de modélisation (142) agencé pour produire le signal représentatif de la condition thermique du moteur sur la base du signal représentatif du courant quadratique moyen à travers la résistance de dérivation respective ; et
un premier détecteur de seuil (143) agencé pour comparer le signal représentatif de la condition thermique du moteur avec une première valeur de seuil et, si le signal représentatif de la condition thermique du moteur est supérieur à la première valeur de seuil, pour produire un signal indicatif d'un moteur thermiquement surchargé ;
la seconde branche de traitement incluant :
un détecteur de crête (144) agencé pour produire le signal représentatif de courant de crête à travers la résistance de dérivation respective ; et
un second détecteur de seuil (145) agencé pour comparer le signal représentatif de courant de crête à une seconde valeur de seuil et, si le signal représentatif de courant de crête est inférieur à la seconde valeur de seuil, pour produire un signal indicatif d'une ligne d'alimentation ayant un flux de courant réduit ou nul.

5. Relais de surcharge selon l'une quelconque des revendications 3 à 4, dans lequel chaque unité de traitement est agencée pour déterminer s'il existe ou non une condition de surcharge sur la base d'une condition thermique du moteur ou d'un autre dispositif déterminée sur la base du signal représentatif de courant à travers la résistance de dérivation à laquelle l'unité de mesure est connectée.

6. Relais de surcharge selon l'une quelconque des revendications 3 à 5, dans lequel l'une de la pluralité d'unités de mesure est une unité de mesure principale (122b) agencée pour produire le signal de déclenchement.

7. Relais de surcharge selon la revendication 6, dans lequel l'unité de mesure principale est couplée aux une ou plusieurs autres unités de mesure (122a, 122c) par un ou plusieurs composants d'isolation électrique (126).

8. Relais de surcharge selon la revendication 2, le moyen de traitement étant une unité de traitement centrale (240) couplée aux unités de mesure.

9. Relais de surcharge selon l'une quelconque des revendications 2 à 8, dans lequel chaque unité de mesure inclut un accumulateur d'énergie pour stocker de l'énergie afin d'alimenter l'unité de mesure.

10. Relais de surcharge selon l'une quelconque des revendications précédentes, dans lequel le relais de surcharge inclut un circuit de déclenchement (150) agencé pour interrompre la continuité de l'alimentation en réponse au signal de déclenchement provenant du moyen de commande et agencé pour rétablir la continuité de l'alimentation en réponse à un signal de réinitialisation provenant du moyen de commande, dans lequel le circuit de déclenchement inclut :
un relais bistable commutable entre une première configuration stable pour interrompre la continuité de l'alimentation et une seconde configuration stable pour rétablir la continuité de l'alimentation ;
un condensateur de déclenchement pour stocker une charge pour commuter le relais bistable dans la première configuration ; et
un condensateur de réinitialisation pour stocker une charge pour commuter le relais bistable dans la seconde configuration
dans laquelle le condensateur de déclenchement et le condensateur de réinitialisation sont protégés contre une décharge.

11. Relais de surcharge selon l'une quelconque des revendications précédentes, dans lequel le moyen de commande est agencé pour recevoir des signaux représentatifs de tensions entre les résistances de dérivation.

12. Relais de surcharge selon l'une quelconque des revendications précédentes, dans lequel le relais de surcharge inclut une unité d'alimentation électrique pour fournir une alimentation électrique au relais de surcharge, l'unité d'alimentation électrique ayant :
un redresseur pour produire un courant continu à partir d'une ou plusieurs lignes d'alimentation d'une alimentation électrique en courant alternatif connectée à un moteur ou à un autre dispositif protégé par le relais de surcharge ; et
au moins un transformateur pour coupler l'unité d'alimentation électrique au relais de surcharge.

13. Relais de surcharge selon la revendication 12, dans lequel l'unité d'alimentation électrique inclut un ou plusieurs régulateurs pour réguler le courant continu produit par le redresseur.

14. Relais de surcharge selon la revendication 12 ou 13, dans lequel l'unité d'alimentation électrique inclut un oscillateur pour alimenter le relais de surcharge avec un courant alternatif, dans lequel le relais de surcharge inclut facultativement un redresseur pour convertir du courant alternatif provenant de l'oscillateur en courant continu destiné à être utilisé par le relais de surcharge, dans lequel facultativement le relais de surcharge inclut une pluralité d'unités de mesure et une pluralité de transformateurs, l'oscillateur étant couplé à chaque unité de mesure par un transformateur respectif, et dans lequel chaque unité de mesure inclut facultativement un redresseur pour convertir un courant alternatif provenant de l'oscillateur en courant continu destiné à être utilisé par l'unité de mesure.

15. Appareil ayant :
un moteur ou autre dispositif ;
une alimentation électrique ayant une pluralité de lignes d'alimentation pour fournir une alimentation électrique au moteur ou à l'autre dispositif ; et
un relais de surcharge selon l'une quelconque des revendications précédentes, chaque résistance de dérivation du relais de surcharge étant située dans le trajet de courant d'une ligne d'alimentation respective de l'alimentation électrique.
